# EUROPEAN PATENT SPECIFICATION

(11) **EP 1 954 001 B1**
(45) Date of publication and mention of the grant of the patent: **04.01.2012**
(21) Application number: 08250388.9
(22) Date of filing: 01.02.2008
(51) Int. Cl.: H04L 29/06

(54) **Method for Providing Data Securely Allowing Smooth Switching of Channels**
Verfahren zum sicheren Erteilen von Daten wobei Kanäle nahtlos gewechselt werden können
Procédé pour la provision de données à une manière sécurisée avec la possibilité de changement de canaux non-interruptif

(30) Priority: 01.02.2007 GB 0701884
(43) Date of publication of application: 06.08.2008
(73) Proprietor: Wecomm Limited, 6a Austin Friars London EC2N 2HA (GB)
(72) Inventor: Jowett, Frederick, London SW11 2AZ (GB); Russell, Peter George Fisher, Basingstoke RG22 4TU (GB)
(74) Representative: Atkinson, Ralph

(56) References cited:
- WO-A-2006/084503
- US-A1- 2004 133 657
- US-A1- 2006 047 845
- SCHULZRINNE COLUMBIA U A RAO CISCO R LANPHIER REALNETWORKS MAGNUS WESTERLUND ERICSSON A NARASIMHAN OVERTURE H: "Real Time Streaming Protocol 2.0 (RTSP); draft-ietf-mmusic-rfc2326bis 14.txt" IETF STANDARD-WORKING-DRAFT, INTERNET ENGINEERING TASK FORCE, IETF, CH, vol. mmusic, no. 14, 22 December 2006 (2006-12-22), XP015047952 ISSN: 0000-0004

## Description

### Technical Field

The present invention relates to a method of providing data over a network.

### Background of the Invention

There is a trend currently towards the viewing of audio-visual data such as television channels on mobile devices such as mobile telephones. Known methods of supplying audio-visual data to devices involve lengthy set-up procedures, incurring a delay between a user requesting data and its provision, which is increased when a wireless link is involved. If a user wishes to view different data the set-up procedure must be performed again. Thus these methods are not suitable for a television-viewing environment in which a user will wish to change channel frequently.

International Patent Application No. 2006/084503 discloses a system and method for switching between channels supplied to mobile devices. It addresses the problem that the packets in each channel have a sequence number and a display time, and that simply switching between the channels will cause a mobile device to be presented with packets that appear to be out of order and that have an unexpected display time. This problem is solved by, upon receiving all channels of data, standardising the display times and sequence numbers. However, this creates an overhead of altering every packet that arrives to the server, whether the data is required by a user or not.

### Brief Summary of the Invention

According to an aspect of the present invention, there is provided a method of providing data over a network, comprising the steps of negotiating a communications link with a network-connected terminal, providing first data comprising a plurality of packets each including a display time to said terminal over said communications link, stopping provision of said first data to said terminal, and providing second data comprising a plurality of packets each including a display time to said terminal over said communications link, wherein the display time in each of the packets in said second data is modified so that said second data resembles said first data.

### Brief Description of the Several Views of the Drawings

*Figure 1* illustrates a networked environment;
*Figure 2* shows a PDA shown in *Figure 1**;*
*Figure* 3 shows illustrates the contents of the memory of the PDA shown in *Figure 2**;*
*Figure 4* shows steps carried out by a media player on the PDA shown in *Figure 2**;*
*Figure 5* details steps carried out in *Figure 4* to negotiate a communications link;
*Figure 6* illustrates the relationship between display time and server time in data sent over the communications link negotiated in *Figure 5**;*
*Figure 7* details steps carried out in *Figure 4* to receive and display data;
*Figure 8* illustrates the PDA shown in *Figure 2* displaying data;
*Figure 9* shows steps carried out by a content application on the PDA shown in *Figure 2**;*
*Figure 10* details steps carried out in *Figure 9* to obtain and display data;
*Figure 11* illustrates the PDA shown in *Figure 2* displaying a channel guide;
*Figure 12* shows a content server shown in *Figure 1**;*

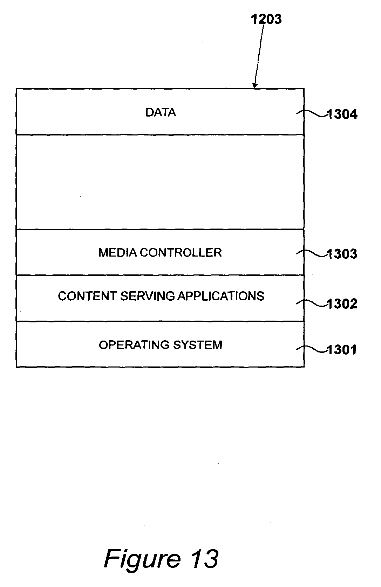

*Figure 13* shows the contents of the memory of the content server shown in *Figure 12*;
*Figure 14* details steps carried out by a media controller on the content server shown in *Figure 12*;
*Figure 15* shows a media server shown in *Figure 1*;

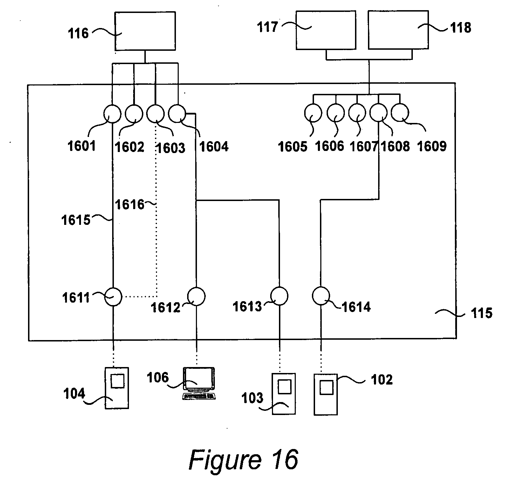

*Figure 16* illustrates how the media server shown in *Figure 15* receives and transmits data;
*Figure 17* shows the contents of the memory of the media server shown in *Figure 15*;
*Figure 18* details steps carried out by a channel manager on the media server shown in *Figure 15*;
*Figure 19* details steps carried out in *Figure 18* to define a user channel;
*Figure 20* details steps carried out in *Figure 19* to set up the user channel;
*Figure 21* details steps carried out in *Figure 18* to alter a user channel;
*Figure 22* illustrates the effect of altering the user channel during *Figure 21*;
*Figure 23* details steps carried out in *Figure 21* to change display time offsets;
*Figure 23a* details steps carried out in *Figure 23* to augment the display time offsets;
*Figure 24* illustrates the effect of further altering the user channel during *Figure 21**;* and
*Figure 25* illustrates the transmission and receipt of data between the media server shown in *Figure 15* and the PDA shown in *Figure 2**.*

### Description of the Best Mode for Carrying out the Invention

### Figure 1

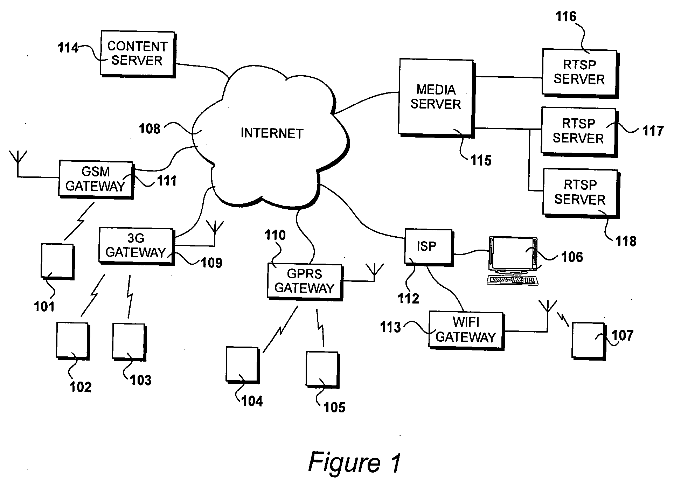

*Figure 1* illustrates a networked environment in which the invention may be used. Terminals **101, 102, 103, 104, 105, 106** and **107** receive data via the Internet **108.** The terminals are typically mobile telephones or Personal Digital Assistants (PDAs) but could be any computing device capable of connecting to the Internet, including a home or office computer.

The data is provided over a variety of networks, including in this example radio networks such as mobile telephony networks or wireless networks. A Third Generation (3G) mobile telephony network, connected to the Internet **108,** includes a gateway **109** which provides connectivity to a network of base stations. Mobile telephones **102** and **103** are each connected to one of these base stations. A General Packet Radio Service (GPRS) gateway **110** is connected to the Internet **108** and provides connection to a network of GPRS base stations. PDAs **104** and **105** are each connected to one of these stations. A GSM gateway **111** is connected to the Internet **108,** providing connectivity for mobile telephone **101,** Internet Service Provider (ISP) **112** is connected to the Internet **108** and provides internet access for PC **106** and a Wireless Network or Wireless Fidelity (WiFi) gateway **113.** PDA **107** has a link to gateway **113.** Thus there is a number of ways in which a terminal may link to the Internet **108** in order to receive data.

The data received by terminals **101** to **107** is provided by content server **114** and media server **115.** Content server **114** provides many kinds of data required by users of terminals, for example news and sports, financial data, maps and telephone directories, television and cinema listings, and so on. Some of this data may be available to subscribers and some may be free. Users may make transactions with content server **114** such as purchasing stocks or placing bets, changing their subscription levels or personal details, and so on.

Media server **115** provides streamed audio-visual data such as television channels, media-on-demand or downloadable music videos. Streamed television channels are provided to media server **115** by Real Time Streaming Protocol (RTSP) servers **116, 117** and **118.**

### Figure 2

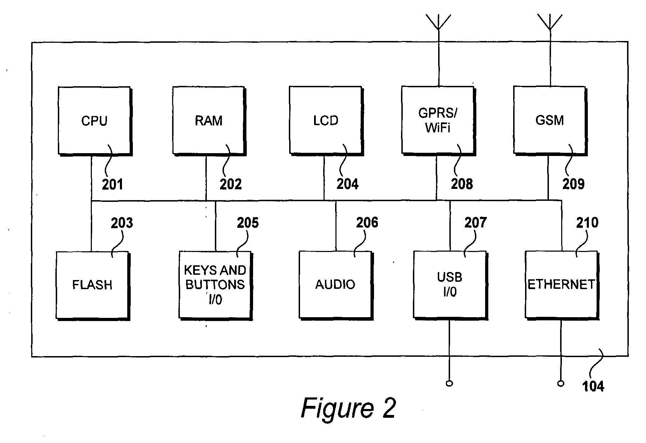

*Figure* 2 details PDA **104**. As described above, this is an example of a terminal that could be used in a system embodying the invention. It includes a CPU **201** with a clock speed of 400 megahertz (MHz) with memory **202** being provided by 64 megabytes (MB) of RAM. 256MB of non-volatile FLASH memory **203** is provided for program and data storage. Liquid crystal display **204** is used to display information to the user. Input/output **205** processes the input of the keys and buttons **513** while audio input/output **206** provides a microphone and speaker interface for use with the telephone facility. Universal Serial Bus (USB) input/output **207** is used to connect PDA **511** to another computer, or to the Internet **110** via a wired connection. GPRS/WiFi connection **208** and GSM connection **209** enable PDA **511** to connect to wireless networks, while Ethernet card **210** enables PDA **511** to connect to a wired network, for example via a docking station on a computer.

### Figure 3

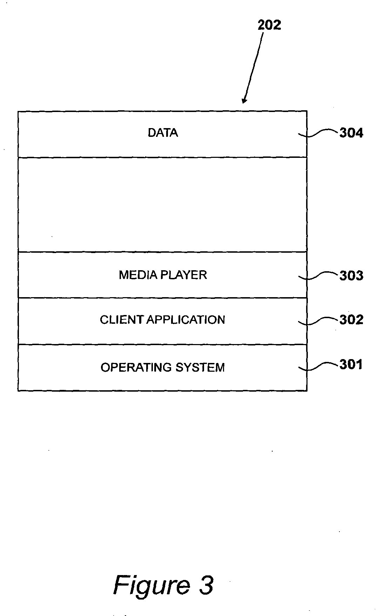

*Figure 3* illustrates the contents of memory **202** of PDA 104. An operating system **301** provides overall functionality for the device and content application **302** communicates with content server **114** to obtain and display data required by the user and to make transactions. Music player **303** is a plug-in that displays audio-visual data. This data may be stored on PDA **104** or provided by media server **115.**

Memory **202** also contains data **303,** which includes such data as undisplayed contents data or media data, packets to be sent or that have not been acknowledged, and data required by operating system **301** and content application **302.**

### Figure 4

Media player **303** is a "black box" plug-in with a simple API. It will generally only play data that is sent using the Real Time Protocol (RTP), although it may also comprehend a proprietary protocol, and will accept a very limited number of commands. A media player application on, for example, a desktop computer would be much more sophisticated but since the invention described herein is designed to function on any kind of terminal it must interact with media players having the least amount of functionality, such as that described herein.

Audio-visual data is typically sent from an RTSP (Real Time Streaming Protocol) server to an RTSP client over UDP/IP using a communications link that is negotiated using RTSP over a TCP/IP link. It comprises data packets, sent in two RTP streams, one for video data and one for audio data, and two RTCP (Real Time Control Protocol) streams which contain control packets. A media player is generally configured to act as an RTSP client.

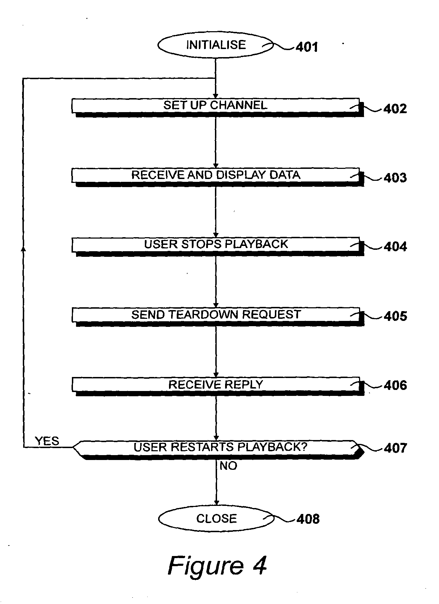

Steps performed by media player **303** are described in *Figure 4*. At step **401** the player is initialised by operating system **301** or content application **302.** At step **402** a communications link is set up. This may be to data stored locally on flash memory **203,** as is likely if the player has been initialised by operating system **301,** or to a remote location as is the case if it has been initialised by content applications **302.** For the purposes of this description, the communications link is with media server **115** via Internet **108.**

At step **403** audio-visual data is received over the communications link and displayed on LCD **204.** Additionally, report packets are generated and sent over the communications link. These report packets confirm that the link is open and also contain information such as the number of lost packets.

At step **404** a STOP request is received, usually as a result of the user stopping playback on the device, and thus at step **405** a TEARDOWN request is sent over the communications link. This closes the communications link and at step **406** a reply is received confirming this. At step **407** a question is asked as to whether the user restarts playback and if this question is answered in the affirmative control is returned to step **402** and a new communications link is opened. If it is answered in the negative then the plug-in is terminated at step **408.**

### Figure 5

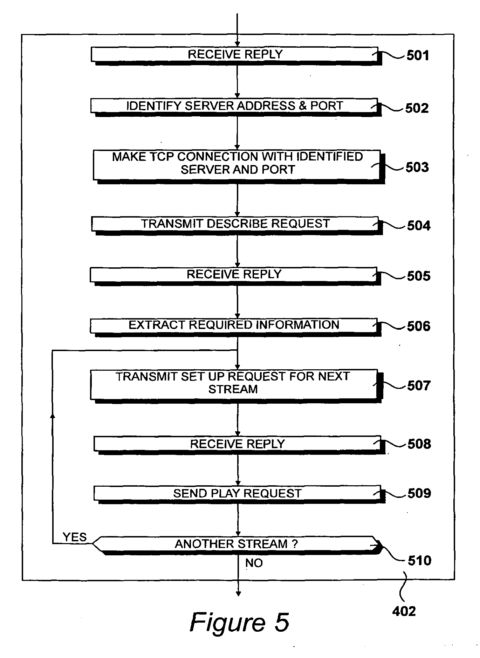

*Figure* 5 details step **402** at which a communications link is defined by a series of Real Time Streaming Protocol (RTSP) messages sent over TCP. At step **501** a universal resource locator (URL) is received. This URL must start with "rtsp://" and be followed by an address of a server, a port number, and an identification of what is to be played, such as a file name. The URL is usually passed to the player in the form of a text string. At step **502** the player identifies the server address and port from the URL and at step **503** it makes a TCP connection with the identified port on the identified server. Once this TCP connection is made a DESCRIBE request is transmitted over it. This requests the server to describe the data that is going to be sent and thus at step **505** a reply is received and the required information is extracted at step **506**.

The information received includes an indication as to how many streams there are within the data. If the data is audio only then the indication will be that there is one stream, while for audio-visual data it will be two. Currently there is no other type of data that can be streamed but provision is made within the protocol for as many streams as are necessary. Thus at step **507** a SETUP request is transmitted for the first identified stream. This request includes the number of the port on the device to which the stream of data packets is to be delivered, and also the port to which the stream of control packets associated with the stream of data packets is to be delivered. Typically, these port numbers will be consecutive. At step **508** a reply is received from the server indicating the ports that it is using and at step 509 a PLAY request is sent to start the sending of packets.

At step **510** the question is asked as to whether there is another stream to be set up. If this question is answered in the affirmative then control is returned to step **507** and a SETUP request is transmitted again. However, if all streams have been set up then the question is answered in the negative and step **402** is completed.

Once this communications link is established then data is sent using RTP, typically over UDP since acknowledgements are not generally required but over TCP if UDP is not possible, to the two identified ports. Additionally, control packets are sent using the Real Time Control Protocol (RTCP) to the two additional ports. The original TCP connection may then be broken.

Thus it can be seen that for a typical communications link along which a stream of audio data and a stream of video data are to be sent, a total of six TCP requests must be made before data can be transmitted, and any number of these requests may need to be retransmitted if packets are lost. This can take a long time, particularly on a wireless link, and thus it may take between ten and twenty seconds to set up a communications link before data can be streamed to a terminal. This may be acceptable when the user wishes to view a single item, such as in a video conferencing environment. However, in the environment shown in *Figure 1* the user of a terminal may be watching television channels on the terminal. Such a user typically wishes to change channel fairly frequently, for example when "channel surfing" to find a suitable programme to watch, when flicking between channels to check whether a programme has begun, when changing to another channel during a commercial break, and so on. Using the current system, every time the user wished to change channel a new communications link would have to be negotiated. Clearly, a user will not tolerate a twenty-second delay every time he wishes to change channel.

### Figure 6

Once the communications link is set up, data packets are streamed to PDA **104** using RTP. For each RTP stream, there is an RTCP stream of control packets. Thus the data comprises two sets of streams, each set comprising a stream of data packets and a stream of control packets.

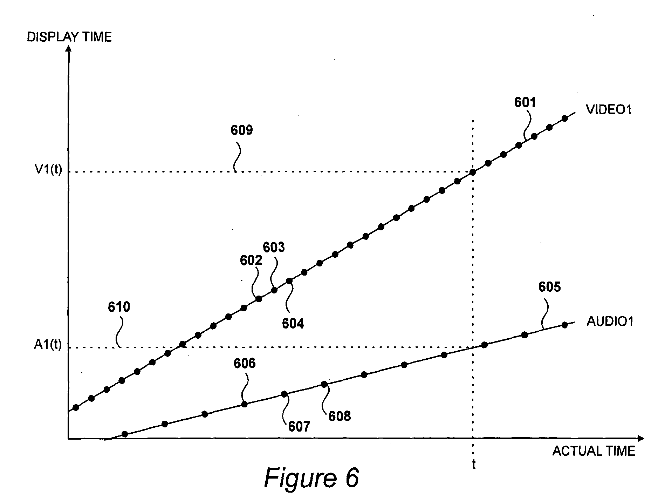

The control packets contain information necessary to allow media player **303** to display the audio-visual data correctly. In particular, they relate a display time to an server time. Each stream of RTP packets is considered to have a display time as exemplified in the graph shown in *Figure 6*. This display time is linearly related to the server time and can be described using a gradient and an offset. The RTSP server that generates the RTP data packets also generates a random gradient and offset for each stream, (a preset gradient and random offset may be used instead). These are used to generate a display time for each RTP packet in that stream. The player receiving that packet must convert the display time into an server time in order to decide when the data included in that packet should be displayed.

As shown in *Figure* 6, a video stream **601** includes a plurality of video data packets such as packets **602, 603,** and **604.** An audio stream 605 includes a plurality of audio data packets such as packets **606, 607** and **608.** These are more infrequent than the video data packets because audio data is typically smaller. Streams **601** and **605** have different gradients and different offsets. Thus at time t, the display time for video stream **601** is shown by line **609** while the display time for audio stream **605** is shown by line **610.** Thus two data packets that should be displayed at similar times may have very different display times.

Since the audio stream and video stream have different display times, additional information is required to display the audio and video data synchronously. Each control packet for each stream contains the server time at which the control packet was generated and the corresponding display time. Different players use this information in different ways, but typically the gradient is defined during setup, and an extrapolation is made from the last few received control packets to define an adder which when combined with the defined gradient gives a time definition. This is used to determine what the server time is of a received RTP packet. Alternatively, a client may also be able to determine the gradient using extrapolation.

### Figure 7

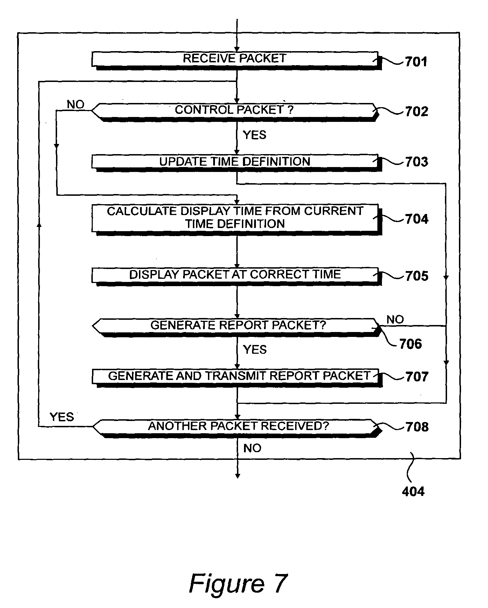

*Figure 7* details step **404** at which data is received and displayed by media player **303.** At step **701** a packet is received and at step **702** a question is asked as to whether it is a control packet, which can be determined by which port a packet arrives on. If this question is answered in the affirmative then at step **703** the time definition for the relevant stream is updated. If the question is answered in the negative then the packet is a data packet and at step **704** the display time for the data packet is calculated from the current time definition. At step **705** the packet is displayed at the correct time. It may be that data packets received later than the current data packet should be displayed earlier, or vice versa. This is because packets may be routed differently and take a shorter or longer time to arrive. Also, packets may be lost and thus there may be times at which no data is displayed at all. However, this is not likely to be very noticeable to the user as long as the packet loss is not too high.

At step **706** a question is asked as to whether a report packet should be generated. These are sent every few seconds, and thus if the question is answered in the affirmative then a report packet is generated and transmitted at step **707.** Amongst other information, this report packet contains a loss fraction. Because all data packets are numbered sequentially it is possible for the player to know how many packets have not been received and this information is included in the report packet.

At this stage, and following step **703,** a question is asked as to whether another packet has been received. If this question is answered in the affirmative then control is returned to step **702** and the packet is processed. If it is answered in the negative then step **404** is completed.

### Figure 8

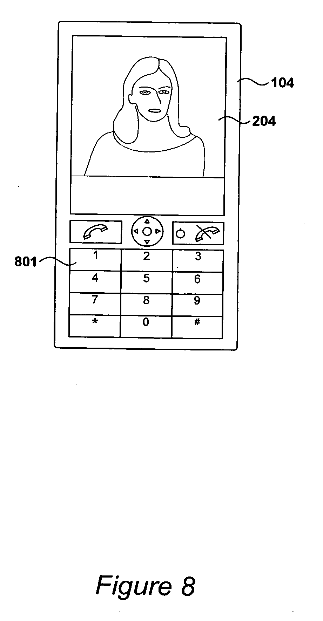

An illustration of PDA **104** is shown in *Figure 8*. Audio-visual data is displayed on LCD **204** and the user can control the device using buttons **801.** In the illustration, the user is viewing a news channel.

According to prior art systems, if the user wished to change channel the player **303** would terminate the communications link and negotiate a new one as described with respect to *Figure 5*, which could take as long as twenty seconds. However, according to the invention described herein, the user may change channel much more quickly.

### Figure 9

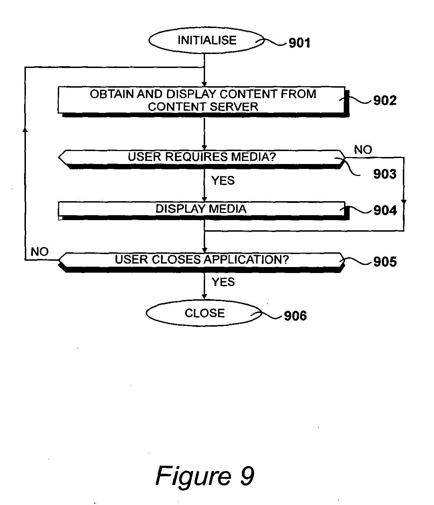

*Figure 9* details content application **302.** This is an application loaded on PDA **104** that communicates with content server **114** via internet **108** in order to supply content to the user as required and also to facilitate transactions made by the user. Content application **302** communicates with media player **303** using the limited range of commands that the player will accept, typically only PLAY, STOP or PAUSE. It will also accept a text string containing a URL as described with reference to *Figure 5*. At step **901** the content application **302** initialises when the PDA **104** is switched on. At step **902** the application obtains and displays content as required by the user. At step **903** a question is asked as to whether the user wishes to view media, indicated by the user making certain keypresses using keys **801** based on options displayed on LCD **204,** and if this question is answered in the affirmative then at step **904** audio-visual data is obtained and displayed. At step **905** a question is asked as to whether the user is closing the application. This usually occurs when the device is switched off, but the application can be closed at any time. If this question is answered in the negative then control is returned to step **902** and if it is answered in the negative then the application closes at step **906.**

### Figure 10

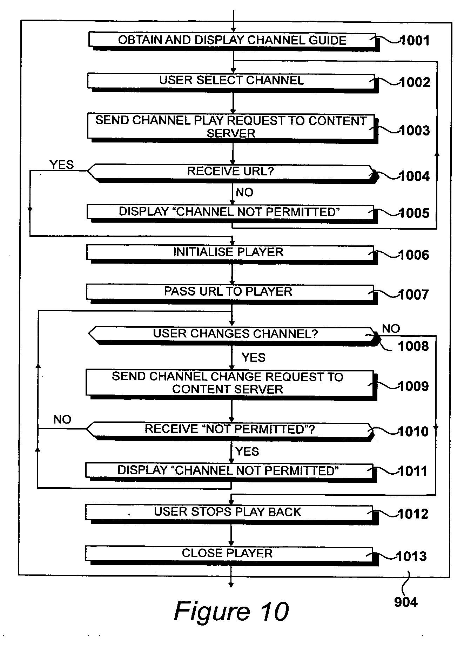

*Figure 10* details step **904** during which audio-visual data is obtained and displayed. At step **1001** a channel guide is obtained and displayed on LCD **204.** This guide indicates to the user which programs are being shown on available channels and at what time. Channels that are not available to the user may also be shown, for example to encourage the user to increase his subscription level. At step **1092** the user selects a channel to view and at step **1003** a CHANNEL PLAY request is sent to content server **114.** The content server generates a URL and returns it to the device over internet **108** and thus at step **1004** a question is asked as to whether a URL has been received. If this question is answered in the negative then either no message or an error message has been received from content server **114,** and so the message "CHANNEL NOT PERMITTED" is displayed at step **1005** before control is returned to step **1002** for a new channel selection. However, if it is answered in the affirmative then at step **1006** media player **1003** is initialised and at step **1007** the received URL is passed to the player in the form of a string of text. The URL points the player to media server **115,** and upon receipt the player carries out the steps shown in *Figure 5* to set up a communications link to start streaming and displaying audio-visual data.

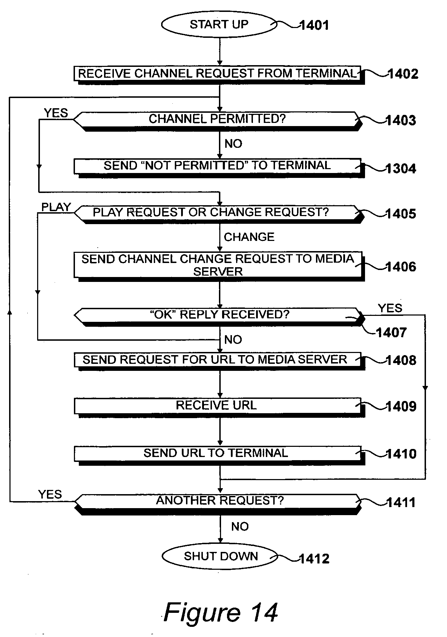

At step **1008** a question is asked as to whether the user wishes to change the channel, indicated by the user making certain keypresses using keys **801** based on options displayed on LCD **204.** If this question is answered in the affirmative then at step **1009** a CHANNEL CHANGE request is sent to content server **114.** As will be described further with respect to *Figure 14*, upon receipt of this request content server **114** requests media server **115** to change the data sent via the established communications link. Thus the player receives different data, ie a new channel, without having to terminate and renegotiate the communications link. The channel change thus appears virtually seamless to the user.

Thus at step **1010** a question is asked as to whether the message "NOT PERMITTED" has been received, and if this question is answered in the affirmative then the message "CHANNEL NOT PERMITTED" is displayed to the user. Otherwise, the channel change has been carried out and in both cases then control is returned to step **1008.** Eventually the question asked at step **1008** is answered in the negative and at step **1012** the user stops play in the media player. The player is closed at step **1013** and step **904** is complete.

### Figure 11

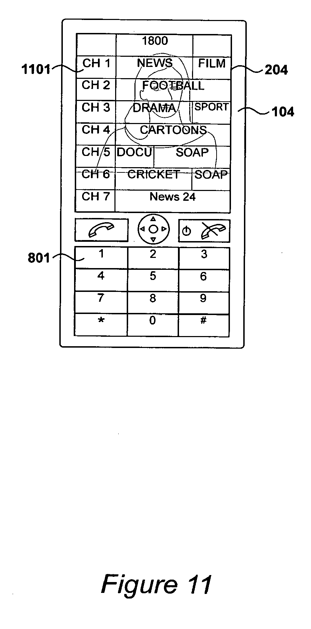

PDA **104** is again illustrated in *Figure 11**.* The user has indicated that he wishes to change channel and so content application **302** overlays a channel guide **1101** on the display **204.** The user may select a channel to watch using buttons **801,** following which the content application **302** contacts the media server **114** to change channel. Media server **115** sends the packets of a different channel down the existing communications link and thus the channel change is transparent to the media player **303.** However, because each data stream of the new channel will have a different display time from the current streams, they cannot be simply switched over. The player will continue to apply its existing time definitions to the new packets, thus leading to a calculation of server time that could be wrong by seconds, minutes, days or even years. Further, the new channel's data streams will have different packet sequence numbers from the original streams.

### Figure 12

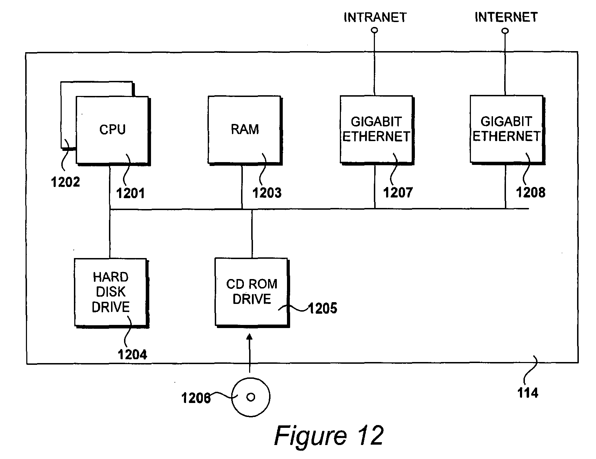

*Figure* 12 shows content server **114.** It comprises two parallel central processing units (CPUs) **1201** and **1202** having a clock frequency of 3GHz, a main memory **1203** comprising 4GB of dynamic RAM and local storage **1204** provided by a 20Gb-disk array. A CD-ROM disk drive **1205** allows instructions to be loaded onto local storage **1204** from a CD-ROM **1206.** A first Gigabit Ethernet card **1207** facilitates intranet connection, and can also be used for installation of instructions. A second Gigabit Ethernet card 1208 provides a connection to Internet **108.**

### Figure 13

The contents of main memory **1203** are illustrated in *Figure 12**.* Operating system **1301** provides operating system instructions for common system tasks and device abstraction. In this example a Windows® Server operating system is used, but another system providing similar functionality could be used. Content serving applications **1302** include instructions for delivering content to terminals, updating personal details, making transactions, and so on. Media controller **1303** receives requests from terminals for the playing of audio-visual data, including channel change requests, and communicates with media server **115.** Data **1304** includes session data for each user, buffered messages, and other data used by operating system **1301,** content serving application **1302** and media controller **1303.**

### Figure 14

*Figure 14* details steps carried out by media controller **303** to serve requests from terminals such as PDA **104.** At step **1401** it starts, typically during the starting of content server **114**, and at step **1402** a request to view a channel is received from a content application on a terminal, such as that sent by content application **302** at step **1003.** At step **1403** a question is asked as to whether the user is permitted to view the requested channel. This is done by loading user data from hard drive **1204** into main memory **1203** and checking the user permissions. If the question is answered in the negative then at step **1404** the message "NOT PERMITTED" is sent back to the requesting terminal at step **1404.** However, if it is answered in the affirmative then at step **1405** a question is asked as to whether the request is a CHANNEL PLAY request, indicating that a new communications link needs to be opened, or a CHANNEL CHANGE request, indicating that the link is open but that a new channel is required.

If the answer is CHANGE then at step **1406** a CHANNEL CHANGE request is sent in turn to media server **115.** This request identifies the requesting device and the requested channel. At step **1407** a further question is asked as to whether a reply of "OK" is received. If this question is answered in the negative then for some reason the media server cannot change channel, probably because the communications link has been broken. Thus at this stage, or if the received request is a CHANNEL PLAY request, a request for a new URL is sent to media server **115.** At step **1409** the URL is received and at step **1410** it is sent to the requesting terminal in order that the terminal can open a TCP connection using the URL. The media controller takes no further part in the set-up of the communications link.

At this stage, or following an "OK" reply at step **1407,** a question is asked at step **1411** as to whether another request has been received. If this question is answered in the affirmative then control is returned to step **1403** and the process is repeated. Eventually the question is answered in the negative and the process is shut down at step **1412,** usually with the switching off for some reason of content server **114.**

Thus media controller acts as an intermediary between a terminal such as PDA **104** and media server **115,** checking that a user is permitted to view channels before requesting media server **115** to fulfil the request.

### Figure 15

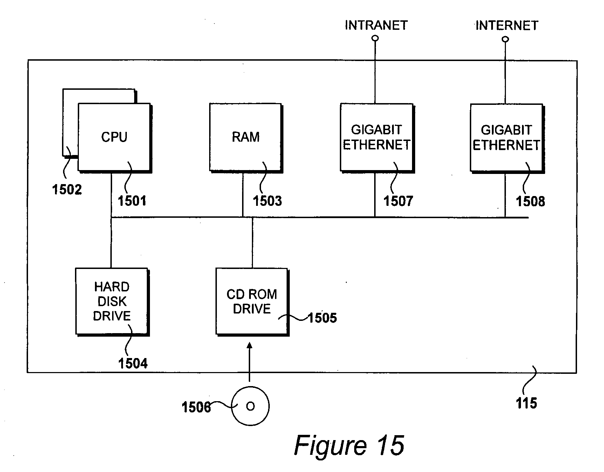

*Figure 15* shows media server **115,** which is substantially similar to content server **114.** It comprises two parallel central processing units (CPUs) **1501** and **1502** having a clock frequency of 3GHz, a main memory **1503** comprising 4GB of dynamic RAM and local storage **1504** provided by a 20Gb-disk array. A CD-ROM disk drive **1505** allows instructions to be loaded onto local storage **1504** from a CD-ROM **1506.** A first Gigabit Ethernet card **1507** facilitates intranet connection to RTSP servers **116, 117** and **118.** A second Gigabit Ethernet card **1508** provides a connection to Internet **108.**

### Figure 16

Media server **115** receives data streams from RTSP servers **116** to **118** that are forwarded to the terminals on request. Media server **115** sets up a plurality of server channels **1601, 1602, 1603, 1604, 1605, 1606, 1607, 1608** and **1609,** each of which emulates an RTSP client and negotiates a communications link in the usual way in order to receive audio-visual data from the RTSP servers. Thus, for example, server channel **1601** negotiates communications link **1610** with RTSP server **116** in order to receive the two RTP streams and two RTCP streams that define a first television channel. This audio-visual data contains the same programmes that are sent over the usual television and satellite networks, but it is encoded suitably for display on terminals, typically reducing the amount of data considerably. In this embodiment all the data is encoded using the same encoder to allow easier switching of channels, but in other embodiments transcoding of the outgoing data could be used at the server, thus allowing different encodings of the different incoming channels.

For each terminal that has requested audio-visual data a user channel is defined, such as user channel **1611** that communicates with PDA **104,** user channel **1612** that communicates with PC **106,** user channel **1613** that communicates with mobile telephone **103,** and user channel **1614** that communicates with mobile telephone **102.** Each user channel emulates an RTSP server in order to communicate with the media player on its respective terminal.

Each user channel receives input from one server channel. Thus, for example, user channel **1611** receives input from server channel **1601,** user channels **1612** and **1613** both receive input from server channel **1604,** and user channel **1614** receives input from server channel **1608.** These inputs are the data received from the RTSP servers by the respective server channel. On first set-up of a user channel the input data is passed by the user channel to the terminal without alteration. However, upon fulfilment of a channel-change request the input is changed. Thus, when PDA **104** requests a change of channel to the channel provided by server channel **1603** the media server **115** changes the input to user channel **1611.** The input represented by line **1615** is stopped and instead the data from server channel **1603** is input, as represented by line **1616.**

However, once the channel has been changed the data can no longer be sent unaltered to PDA **104.** The display time within each RTP and RTCP packet must be altered before being sent. Further, since the media player is expecting packet numbers to continue in sequence, the sequence numbers of the packets must also be altered.

Thus a communications link is negotiated with a network-connected terminal and first data, ie the data of the first channel, is provided to the terminal over the communications link. Upon receipt of a request from the terminal, provision of the first data to the terminal is stopped and second data, ie the data of the second channel, is provided to the terminal over the communications link. At least one characteristic of the second data, ie the display time and the sequence numbers, is modified so that the second data resembles the first data. This means that the receiving terminal processes the data and displays it as if it were the first data.

### Figure 17

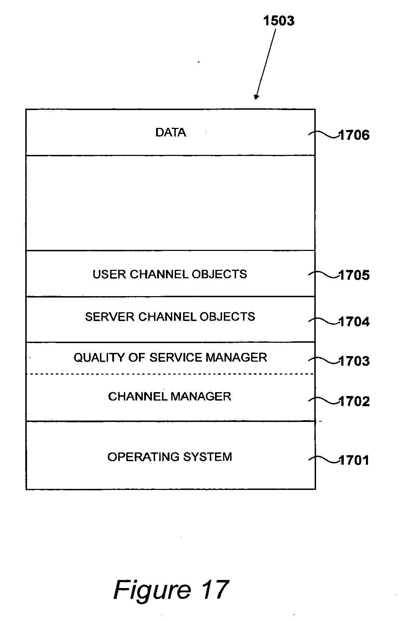

The contents of main memory **1503** are illustrated in *Figure 17**.* Operating system **1701** provides operating system instructions for common system tasks and device abstraction. In this example a Windows® Server operating system is used, but another system providing similar functionality could be used. Channel manager **1702** receives requests from media controller **1303** and manages the server channels and user channels. It also includes a Quality of Service manager **1703** that monitors report packets received from terminals. Server channel objects **1704** define server channels **1601** to **1609** while user channel objects **1705** define user channels **1611** to **1614.** Data **1706** includes data used by operating system **1701** and channel manager **1702.**

### Figure. 18

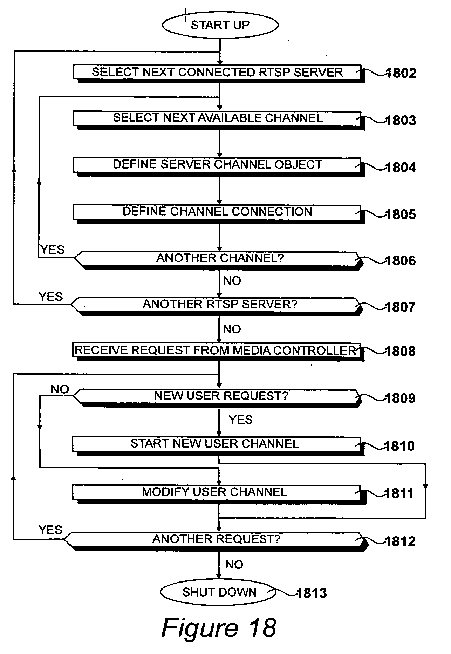

*Figure 18* details steps carried out by channel manager **1702.** At step **1801** it starts up, usually with the switching on of media server **115.** At step **1802** the first connected RTSP server is selected and at step **1803** the first channel that the server supplies is selected. At step **1804** a server channel object is defined to receive the data and at step **1805** a communications link is defined between the RTSP server and the server channel as an RTSP client. At step **1806** a question is asked as to whether there is another channel on the server, and if this question is answered in the affirmative then control is returned to step **1803** and the next channel is selected. If it is answered in the negative then at step **1807** a further question is asked as to whether there is another connected RTSP server, and if this question is answered in the affirmative then control is returned to step **1802** and the next server is selected. Alternatively, if the question is answered in the negative then all the necessary server channels have been defined.

Thus at step **1808** a request to play a channel is received from media controller **1303** on content server **114.** At step **1809** a question is asked as to whether the request is a CHANNEL PLAY or a CHANNEL CHANGE request. If the answer is PLAY then then at step **1810** a new user channel is defined. Alternatively, if it is a CHANGE request then at step **1811** the existing user channel for the requesting terminal is modified. Following either step; a question is asked at step **1812** as to whether another request has been received, and if this question is answered in the affirmative then control is returned to step **1809** and the request is processed. Eventually the question is answered in the negative and channel manager **1702** is shut down at step **1813,** usually with the switching off for some reason of media server **115.**

### Figure 19

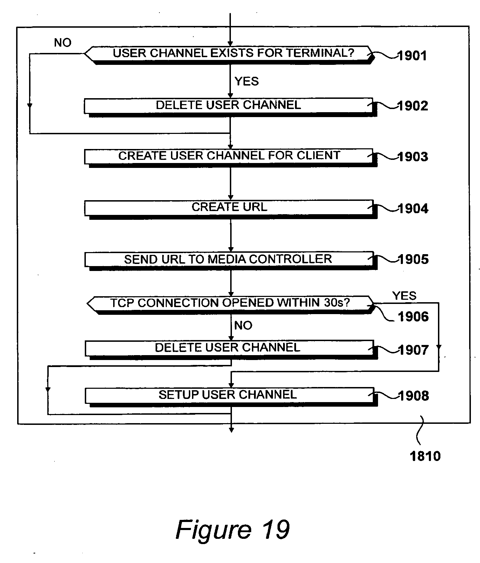

*Figure 19* details step **1810** at which a new user channel is defined. At step **1901** a question is asked as to whether a user channel already exists for the requesting terminal. This may happen when a communications link is broken and the terminal needs to renegotiate the link with a new CHANNEL PLAY request, and so if the question is answered in the affirmative then the existing user channel is deleted at step **1902.** At this stage, or if the question is answered in the negative, then a user channel is created at step **1903** and at step **1904** a URL is created that indicates either the IP address or a resolvable DNS address of the media server, the TCP port that has been allocated to the user channel, and a filename that will be recognised by the channel manager as indicating the defined user channel. This URL is then returned to the media controller **1303** at step **1905** in order that it can be sent in turn to the requesting terminal. The URL is time limited for security purposes and thus at step **1906** a question is asked as to whether the terminal used the URL to open a TCP connection within thirty seconds and if this question is answered in the negative then at step **1907** the user channel is deleted. Alternatively, the TCP connection is initiated in time and the user channel is set up at step **1908.**

### Figure 20

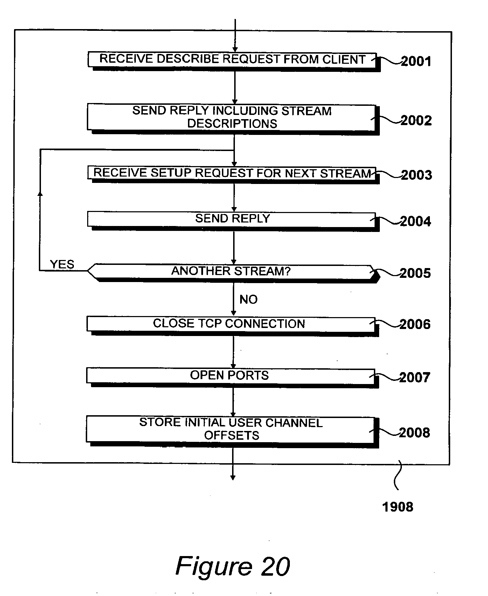

*Figure 20* details step **1908** at which the user channel is set up, mainly by establishing a communications link between the requesting terminal as an RTSP client and the defined user channel as an RTSP server. On the terminal side this is performed by the media player, such as media player **303,** carrying out the steps detailed in *Figure 5**.* Thus at step **2001** the channel manager **1702** receives a DESCRIBE request from the terminal and at step **1703** it sends a reply that includes an indication of the number and type of streams, such as one audio stream and one video stream. At step **2003** a SETUP request is received from the terminal for the first stream, which includes the terminal port numbers that should be used for the first RTP and RTCP data streams. A reply is sent at step **2004** indicating the ports on the media server that the user channel is using for these streams. At step **2005** a question is asked as to whether there is another stream, and if this question is answered in the affirmative then control is returned to step **2003** and a SETUP request is received for that stream. Alternatively, the question is answered in the negative and the TCP connection is closed at step **2006.** At step **2007** the necessary ports are opened and at step **2008** initial user channel offsets of zero are stored in the user channel object. This means that the display times contained in the data packets will be offset by zero, ie left unaltered, as will the sequence numbers of the packets.

### Figure 21

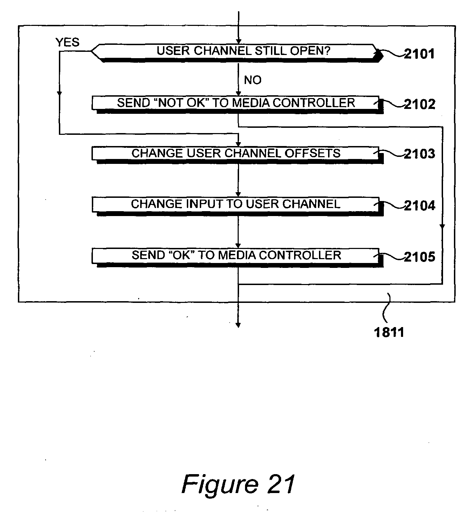

Step **1811** at which a user channel is altered following a CHANNEL CHANGE request is detailed in *Figure 21*. At step **2101** a question is asked as to whether the user channel is still open, since it is possible that the channel manager may have closed it due to a long period of inactivity following a broken communications links. If this question is answered in the affirmative then at step **2102** the message "NOT OK" is sent back to media controller **1303** and **step 1811** is exited. However, under normal circumstances the user channel is open and sending data to the terminal. Thus at step **2103** the channel offsets, ie the display time offsets and the sequence number offsets, are changed in the user channel object and at step **2104** the input to the user channel is changed to the server channel that has the requested television channel. The message "OK" is then sent to media controller **1303** at step **2105.**

### Figure 22

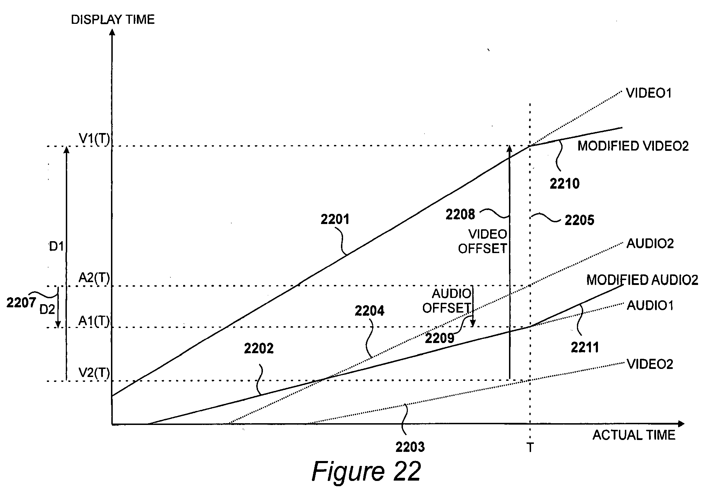

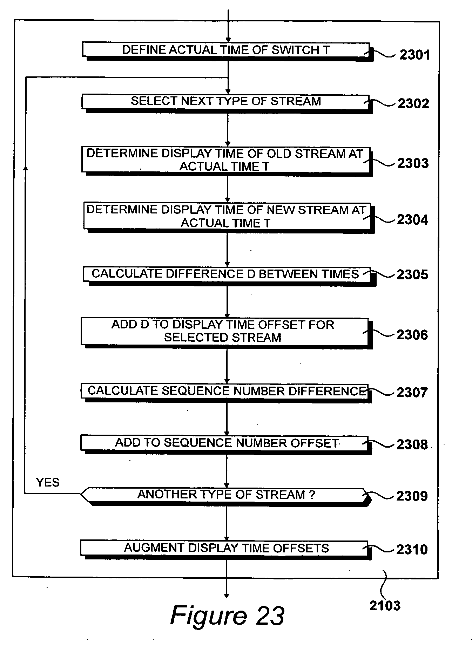

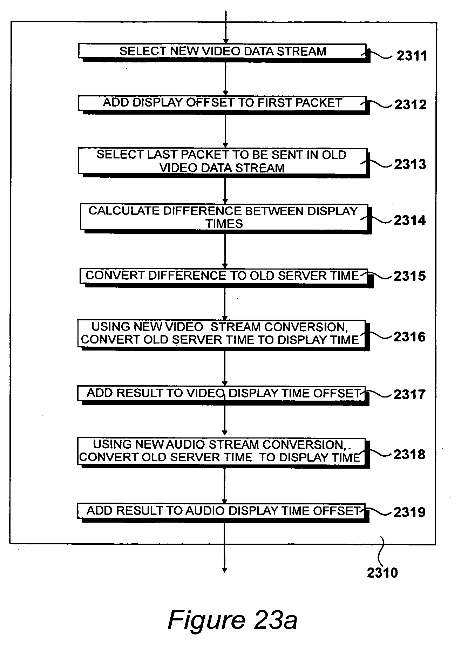

*Figure 22* illustrates the effect of changing the display time offsets at step **2103,** which will be described further with respect to *Figure 23*. The graph plots server time against display time for four RTP streams, a first video stream **2201** and a first audio stream **2202,** which are the streams that are the current input into the user channel, and a second video stream **2202** and a second audio stream **2204,** which carry the television channel that the user wishes to change to.

For each of the streams, the display time corresponding to an server time T shown by line **2205** can be calculated from the RTCP packets corresponding to each stream. This is done in this example by extrapolating from the last four RTCP packets for each stream. The difference in display times D1, shown by arrow **2206,** between the two video streams and the difference in display times D2, shown by arrow **2207,** between the two video streams can then be calculated. D1 is added to the current video offset and D2 is added to the current audio offset, both of which are zero at first set-up of the user channel, to produce a video offset **2208** and an audio offset **2209.** Every packet that is sent by the user channel is altered by adding the video offset to the display time in the RTP and RTCP packets for the video stream, and by adding the audio offset to the display time in the RTP and RTCP packets for the audio stream.

Thus the second video stream is offset as shown by line **2210** and the second audio stream is offset as shown by line **2211.** The player receiving the packets will thus display them at a modified server time. The gradients of the streams are different, leading to a slight speeding up or slowing down at first, but this will be corrected once two or three RTCP packets have been received by the player. The user will not notice this slight change in speed as long as the audio and video streams are synchronised.

In an embodiment where the client is not able to change the gradient once it has been set, all the streams would have to have the same gradient. In practice, it is likely that servers **116, 117** and **118** will use preset gradients rather than randomly-generated ones and thus all the streams would have the same gradient.

The internal clocks on servers **116, 117** and **118** may not be synchronised, and if this is the case then the server time in data packets originating from different servers will be different. The result of this is that when switching between streams from different servers there may be either a jump backwards or a delay in viewing of the data, which will be equal to the difference between the servers' internal clocks. A jump backwards in time would probably not be noticed unless the server time were extremely inaccurate, but a delay would be noticed and not tolerated by a user. Thus the offsets may need to be augmented to take account of this fact, and this is described further with reference to *Figure 23a*.

### Figure 23

*Figure 23* details step **2103** at which the channel offsets are changed as illustrated in *Figure 22*. At step **2301** an server time T is defined and at step **2302** a first type of stream, video or audio, is selected. At step **2303** the display time of the stream that is no longer required is calculated for the server time T, and at step **2304** the same is calculated for the new stream. At step **2305** the difference D between the display times is calculated and at step **2306** this difference is added to the current display time offset for the selected stream type. At step **2307** the packet sequence number difference is calculated by subtracting the sequence number of the next packet in the old stream from the sequence number of the next packet in the new stream and adding it to the current sequence number offset for the selected stream type at step **2308.**

At step **2309** a question is asked as to whether there is another type of stream and if this question is answered in the affirmative then control is returned to step **2302** and the next type of stream is selected. Alternatively, the question is answered in the negative and at step **2110** both of the display time offsets are augmented.

### Figure 23a

The display time offsets for both the video and audio streams may need to be augmented to take account of different server times. If the old and new channels come from the same server, or servers having synchronised internal clocks, this step will result in no change to the offsets. However, if the channels come from different servers having non-synchronised clocks this step will ensure a smooth transition between channels.

At step **2311** the video stream in the new channel is selected and at step **2312** the calculated display time offset for the video stream is added to it. At step **2313** the last packet that was sent in the old video data stream is selected and at step **2314** the difference between the display time in this last packet and the offset display time in the new packet is calculated. Between two channels with no difference in server time, this difference will be zero, but between channels coming from different, non-synchronised servers, this difference will not be zero.

Thus at step **2315** the difference is converted to a server time using the function for the old video stream, and at step **2316** this server time is converted to display time using the function for the new video stream. The result of this is added to the video display time offset at step **2317.** Similarly, at step **2318** the same server time is converted to display time using the function for the new audio stream. The result of this is added to the audio display time offset at step **2319.**

This means that for both audio and video, the first data packet in the new stream has the same display time as the last packet in the old stream and thus any difference between server clocks is allowed for.

### Figure 24

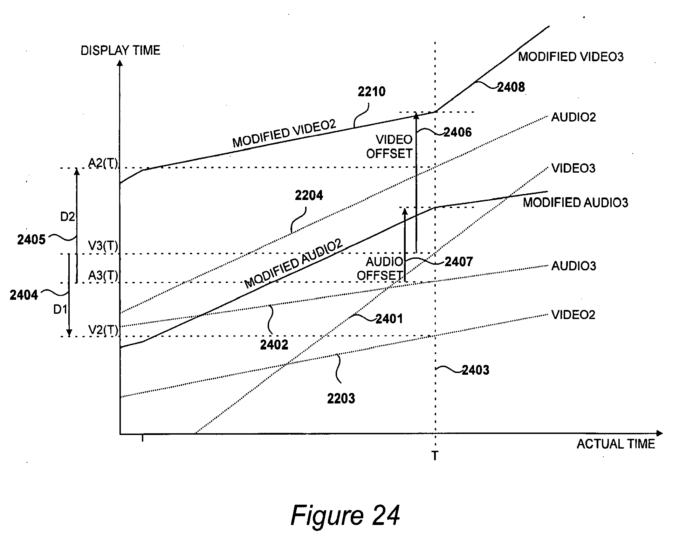

*Figure 24* shows a further illustration of the changing of display time offsets (assuming that the servers are synchronised and no augmentation is necessary). The input to the user channel has changed to the second video stream **2203** and **2204,** but modified data packets are being sent with an offset display time as shown by lines **2210** and **2211.** Another CHANNEL CHANGE request has been received and so the input to the user channel will change to third video stream **2401** and third audio stream **2402.** Thus at time T, shown by line **2403,** the display times for the modified second video and audio streams **2210** and **2211** and the third video and audio streams **2401** and **2402** are calculated. The difference in display times D1, shown by arrow **2404,** between the two video streams and the difference in display times D2, shown by arrow **2405,** between the two audio streams can then be calculated. D1 is added to the current video offset and D2 is added to the current audio offset to produce a video offset **2406** and an audio offset **2407.** Thus the third video stream is offset as shown by line **2408** and the second audio stream is offset as shown by line **2409.**

### Figure 25

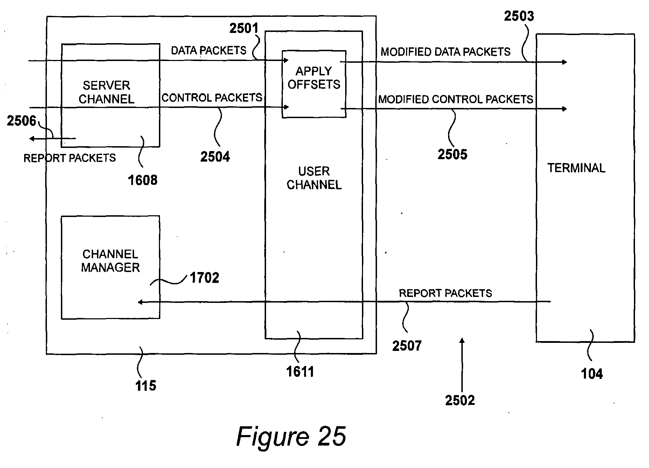

*Figure 25* is a block diagram showing the streams that pass along the communication links. Media server **115** communicates with a terminal, for example PDA **104,** using user channel **1611** which is taking input from, for example, server channel **1608.** RTP data packets **2501** are received by server channel **1608** from RTSP server **116** and passed to user channel **611,** which applies the display time and sequence number offsets and sends them to PDA **104** along communications link **2502** as modified RTP data packets **2503.** RTCP control packets **2504** are received by server channel **1608** and passed to user channel **611,** which applies the offsets and sends them to PDA **104** along communications link **2502** as modified RTCP data packets **2505.**

Server channel **1608** creates RTCP report packets **2506** and sends them to the RTSP server **116.** PDA **104** also creates report packets **2507** and sends them via communications link **2502** to user channel **1611,** which forwards them to channel manager **1702**.

## Claims

1. A method of providing data over a network, comprising the steps of:
negotiating a communications link with a network-connected terminal (101, 102, 103, 104, 105, 106, 107);
providing first data (1615) comprising a plurality of packets each including a display time to said terminal over said communications link;
receiving a request from said terminal to provide second data to said terminal;
stopping provision of said first data to said terminal; and
providing second data (1616) comprising a plurality of packets each including a display time to said terminal over said communications link,
**characterised in that** the display time in each of the packets in said second data is modified so that said second data resembles said first data.

2. A method according to claim **1,** wherein said first data and said second data are audio-visual data representing a first television channel and a second television channel respectively.

3. A method according to either of claims **1** or **2,** wherein said first data and said second data each comprise a plurality of streams of packets.

4. A method according to any of claims **1** to **3,** wherein:
said first data and said second data each comprise a first and second set of streams of packets, each set comprising a stream of data packets and a stream of control packets,
the stream of data packets in said first set conveys video data, and
the stream of data packets in said second set conveys audio data.

5. A method according to claim **4,** wherein each of said data packets contains a display time that corresponds to an server time, and said step of modifying the display time in each of the packets in said second data comprises, for each set of streams of packets in said second data:
calculating a display time offset, and
applying said display time offset to the display time in each of the packets in said set.

6. A method according to claim **5,** wherein
for each set of streams of packets in said first data, each control packet contains a server time and a corresponding display time that is a first function of said server time,
for each set of streams of packets in said second data, each control packet contains a server time and a corresponding display time that is a second function of said server time, and
for each set of streams of packets in said second data, said display time offset is calculated by:
selecting a set of streams of packets in said second data;
selecting a server time;
using the control packets in said selected set, determining a first display time that corresponds to said selected server time;
identifying the set of streams of packets in said first data that conveys the same type of data as said selected set of streams;
using the control packets in said identified set, determining a second display time that corresponds to said specified server time;
calculating the difference between the first and second display times; and
setting said display time offset to be said calculated difference.

7. A method according to claim **6,** wherein said step of calculating a display time offset further comprises the step of adding a previous display time offset to said said calculated difference.

8. A method according to either of claims **6** or **7,** wherein for each set of streams of packets in said second data, said step of calculating a display time offset further comprises augmenting said calculated difference by:
selecting the first packet to be sent in the stream of data packets in said set and adding said calculated diffference to the display time of said first packet to produce a third display time;
selecting the last packet to be sent in the set of streams of packets in said first data that conveys the same type of data as said set of streams;
comparing said third display time with said the display time of said selected last packet; and
augmenting said calculated difference in response to said comparison.

9. A method according to claim **8,** wherein said step of augmenting said calculated difference comprises the steps of:
converting the difference between said first display time and said display time of said selected last packet into a server time using the function of first data;
converting said server time into a display time according to the function of said second data; and
adding said display time to said calculated difference.

10. A method according to any of claims **5** to **9,** wherein said step of altering a characteristic of said second data further comprises applying said display time offset to the display time in each of said control packets in said second data.

11. A method according to any of claims **1** to **10,** further comprising the step of applying a sequence number offset to the sequence number of each packet in said second data.

12. A media server (115) for providing data over a network, comprising a processor (1501, 1502), memory (1503), a first network connection (1507) and a second network connection (1508), wherein said processor is configured to:
receive first and second data (1615, 1616) via said first network connection, said first and second data each comprising a plurality of packets and each packet including a display time:
receive a first request from a terminal (101, 102, 103, 104, 105, 106, 107) to provide said first data;
provide said first data to said terminal via said second network connection;
receive a second request from said terminal to provide said second data; and
stop providing said first data to said terminal;
**characterised in that** said processor is further configured to:
modify the display time in each packet in said second data so that said second data resembles said first data; and
provide said modified second data to said terminal via said second network connection.

13. A media server (115) according to claim **12,** wherein said first data and said second data are audio-visual data representing a first and second television channel respectively.

14. A media server (115) according to either of claims **12** or **13,** wherein:
said first data and said second data each comprise a first and second set of streams of packets, each set comprising a stream of data packets and a stream of control packets,
the stream of data packets in said first set conveys video data, and
the stream of data packets in said second set conveys audio data.

15. A media server (115) according to claim **14,** wherein each of said data packets contains a display time that corresponds to a server time, and said processor is configured to modify the display time in each of said packets by, for each set of streams of packets in said second data:
calculating a display time offset and storing it in said memory, and
applying said display time offset to the display time in each of the packets in said set.

16. A media server (115) according to claim **15,** wherein
for each set of streams of packets in said first data, each control packet contains the server time and a corresponding display time that is a first function of said server time,
for each set of streams of packets in said second data, each control packet contains a server time and a corresponding display time that is a second function of said server time, and
for each set of streams of packets in said second data, said processor is configured to calculate the display time offset by:
selecting a set of streams of packets in said second data;
selecting a server time;
using the control packets in said selected set, determining a first display time that corresponds to said selected server time;
identifying the set of streams of packets in said first data that conveys the same type of data as said selected set of streams;
using the control packets in said identified set, determining a second display time that corresponds to said specified server time;
calculating the difference between the first and second display times; and
setting said display time offset to be said calculated difference.

17. A media server (115) according to claim **16,** wherein said processor is further configured to carry out said step of calculating a display time offset by adding a previous display time offset to said said calculated difference.

18. A media server (115) according to either of claims **16** or **17,** wherein for each set of streams of packets in said second data, said processor is further configured to augment said calculated difference by:
selecting the first packet to be sent in the stream of data packets in said set and adding said calculated diffference to the display time of said first packet to produce a third display time;
selecting the last packet to be sent in the set of streams of packets in said first data that conveys the same type of data as said set of streams;
comparing said third display time with said the display time of said selected last packet; and
augmenting said calculated difference in response to said comparison.

19. A media server (115) according to claim **18,** wherein said processor is configured to augment said calculated difference by:
converting the difference between said first display time and said display time of said selected last packet into a server time using the function of first data;
converting said server time into a display time according to the function of said second data; and
adding said display time to said calculated difference.

20. A media server (115) according to any of claims **16** to **19,** wherein said processor is further configured to alter a characteristic of said second data by applying said display time offset to the display time in each of said control packets in said second data.

21. A media server (115) according to any of claims **12** to **20,** wherein said processor is further configured to modify said second data by applying a sequence number offset to the sequence number of each packet in said second data.

22. A media server (115) according to any of claims **12** to **21,** wherein said processor is configured to
define, in said memory, a first server channel object that receives and outputs said first data and a second server channel object that receives and outputs said second data;
define, in said memory, a user channel object that receives data from one of said server channel objects as input, modifies said data according to stored variables, and outputs said modified data to said terminal; and
alter the variables in said user channel object when the input to said user channel object changes.

## Patentansprüche

1. Ein Verfahren zur Datenlieferung über ein Netzwerk, welches folgende Schritte beinhaltet:
das Aushandeln einer Kommunikationsverbindung mit einem netzwerkverbundenen Endgerät (101, 102, 103, 104, 105, 106, 107);
die Lieferung erster Daten (1615), welche eine Vielzahl von Paketen beinhalten, von denen ein jedes eine Anzeigezeit einschließt, an besagtes Endgerät über besagte Kommunikationsverbindung;
den Empfang einer Anforderung von besagtem Endgerät, zweite Daten an besagtes Endgerät zu liefern;
die Unterbrechung der Lieferung besagter erster Daten an besagtes Endgerät; und
die Lieferung zweiter Daten (1616), welche eine Vielzahl von Paketen beinhalten, von denen ein jedes eine Anzeigezeit einschließt, an besagtes Endgerät über besagte Kommunikationsverbindung,
**dadurch gekennzeichnet, dass** die Anzeigezeit in einem jeden der Pakete in besagten zweiten Daten so verändert wird, dass besagte zweite Daten besagten ersten Daten gleichen.

2. Ein Verfahren gemäß Patentanspruch 1, bei dem besagte erste Daten und besagte zweite Daten audiovisuelle Daten sind, die einen ersten Fernsehkanal beziehungsweise einen zweiten Fernsehkanal darstellen.

3. Ein Verfahren gemäß einem der Patentansprüche 1 oder 2, bei dem besagte erste Daten und besagte zweite Daten jeweils eine Vielzahl von Paketströmen beinhalten.

4. Ein Verfahren gemäß einem beliebigen der Patentansprüche 1 bis 3, bei dem:
besagte erste Daten und besagte zweite Daten jeweils eine erste und zweite Paketstromgruppe beinhalten, wobei jede Gruppe einen Datenpaketstrom und einen Kontrollpaketstrom beinhaltet,
der Datenpaketstrom in besagter erster Gruppe Videodaten überträgt, und
der Datenpaketstrom in besagter zweiter Gruppe Audiodaten überträgt.

5. Ein Verfahren gemäß Patentanspruch 4, bei dem ein jedes besagter Datenpakete eine Anzeigezeit enthält, die einer Serverzeit entspricht, und besagter Schritt der Veränderung der Anzeigezeit in einem jeden der Pakete in besagten zweiten Daten für eine jede Paketstromgruppe in besagten zweiten Daten Folgendes beinhaltet:
die Berechnung einer Anzeigezeitversetzung, und
die Anwendung besagter Anzeigezeitversetzung auf die Anzeigezeit in einem jeden der Pakete in besagter Gruppe.

6. Ein Verfahren gemäß Patentanspruch 5, bei dem
für jede Paketstromgruppe in besagten ersten Daten jedes Kontrollpaket eine Serverzeit und eine entsprechende Anzeigezeit enthält, die eine erste Funktion besagter Serverzeit ist,
für jede Paketstromgruppe in besagten zweiten Daten jedes Kontrollpaket eine Serverzeit und eine entsprechende Anzeigezeit enthält, die eine zweite Funktion besagter Serverzeit ist, und
für jede Paketstromgruppe in besagten zweiten Daten besagte Anzeigezeitversetzung durch Folgendes berechnet wird:
die Auswahl einer Paketstromgruppe in besagten zweiten Daten;
die Auswahl einer Serverzeit;
die Verwendung der Kontrollpakete in besagter ausgewählter Gruppe, wobei eine erste Anzeigezeit ermittelt wird, die besagter ausgewählter Serverzeit entspricht;
die Bestimmung der Paketstromgruppe in besagten ersten Daten, die die gleiche Art von Daten überträgt wie besagte ausgewählte Stromgruppe;
die Verwendung der Kontrollpakete in besagter bestimmter Gruppe, wobei eine zweite Anzeigezeit ermittelt wird, die besagter festgelegter Serverzeit entspricht;
die Berechnung der Differenz zwischen der ersten und der zweiten Anzeigezeit; und
die derartige Einstellung besagter Anzeigezeitverschiebung, dass sie mit besagter berechneter Differenz übereinstimmt.

7. Ein Verfahren gemäß Patentanspruch 6, bei dem besagter Schritt der Berechnung einer Anzeigezeitversetzung des Weiteren den Schritt des Hinzufügens einer vorherigen Anzeigezeitversetzung zu besagter berechneter Differenz beinhaltet.

8. Ein Verfahren gemäß einem der Patentansprüche 6 oder 7, bei dem für jede Paketstromgruppe in besagten zweiten Daten besagter Schritt der Berechung einer Anzeigezeitversetzung des Weiteren die Erhöhung besagter berechneter Differenz durch Folgendes beinhaltet:
die Auswahl des ersten im Datenpaketstrom in besagter Gruppe zu sendenden Pakets und das Hinzufügen besagter berechneter Differenz zur Anzeigezeit besagten ersten Pakets, so dass eine dritte Anzeigezeit geschaffen wird;
die Auswahl des letzten in der Paketstromgruppe in besagten ersten Daten zu sendenden Pakets, das die gleiche Art von Daten überträgt wie besagte Stromgruppe;
den Vergleich besagter dritter Anzeigezeit mit besagter Anzeigezeit besagten ausgewählten letzten Pakets; und
die Erhöhung besagter berechneter Differenz als Schlussfolgerung aus besagtem Vergleich.

9. Ein Verfahren gemäß Patentanspruch 8, bei dem besagter Schritt der Erhöhung besagter berechneter Differenz folgende Schritte beinhaltet:
die Umrechnung der Differenz zwischen besagter erster Anzeigezeit und besagter Anzeigezeit besagten ausgewählten letzten Pakets in eine Serverzeit unter Verwendung der Funktion erster Daten;
die Umrechnung besagter Serverzeit in eine Anzeigezeit gemäß der Funktion besagter zweiter Daten; und
das Hinzufügen besagter Anzeigezeit zu besagter berechneter Differenz.

10. Ein Verfahren gemäß einem beliebigen der Patentansprüche 5 bis 9, bei dem besagter Schritt der Abänderung eines Kennzeichens besagter zweiter Daten des Weiteren die Anwendung besagter Anzeigezeitversetzung auf die Anzeigezeit in einem jeden besagter Kontrollpakete in besagten zweiten Daten beinhaltet.

11. Ein Verfahren gemäß einem beliebigen der Patentansprüche 1 bis 10, welches des Weiteren den Schritt der Anwendung einer Sequenznummerversetzung auf die Sequenznummer eines jeden Pakets in besagten zweiten Daten beinhaltet.

12. Ein Medienserver (115) zur Datenlieferung über ein Netzwerk, welcher einen Prozessor (1501, 1502), Speicher (1503), eine erste Netzwerkverbindung (1507) und eine zweite Netzwerkverbindung (1508) beinhaltet, wobei besagter Prozessor für Folgendes konfiguriert ist:
den Empfang erster und zweiter Daten (1615, 1616) mittels besagter erster Netzwerkverbindung, wobei besagte erste und zweite Daten jeweils eine Vielzahl von Paketen beinhalten und jedes Paket eine Anzeigezeit einschließt;
den Empfang einer ersten Anforderung von einem Endgerät (101, 102, 103, 104, 105, 106, 107), besagte erste Daten zu liefern;
die Lieferung besagter erster Daten an besagtes Endgerät mittels besagter zweiter Netzwerkverbindung;
den Empfang einer zweiten Anforderung von besagtem Endgerät, besagte zweite Daten zu liefern; und
die Unterbrechung der Lieferung besagter erster Daten an besagtes Endgerät;
**dadurch gekennzeichnet, dass** besagter Prozessor des Weiteren für Folgendes konfiguriert ist:
die Veränderung der Anzeigezeit in jedem Paket in besagten zweiten Daten, so dass besagte zweite Daten besagten ersten Daten gleichen; und
die Lieferung besagter veränderter zweiter Daten an besagtes Endgerät mittels besagter zweiter Netzwerkverbindung.

13. Ein Medienserver (115) gemäß Patentanspruch 12, bei dem besagte erste Daten und besagte zweite Daten audiovisuelle Daten sind, die einen ersten beziehungsweise zweiten Fernsehkanal darstellen.

14. Ein Medienserver (115) gemäß einem der Patentansprüche 12 oder 13, bei dem:
besagte erste Daten und besagte zweite Daten jeweils eine erste und zweite Paketstromgruppe beinhalten, wobei jede Gruppe einen Datenpaketstrom und einen Kontrollpaketstrom beinhaltet,
der Datenpaketstrom in besagter erster Gruppe Videodaten überträgt, und
der Datenpaketstrom in besagter zweiter Gruppe Audiodaten überträgt.

15. Ein Medienserver (115) gemäß Patentanspruch 14, bei dem ein jedes besagter Datenpakete eine Anzeigezeit enthält, die einer Serverzeit entspricht, und besagter Prozessor zur Veränderung der Anzeigezeit in einem jeden besagter Pakete und für jede Paketstromgruppe in besagten zweiten Daten durch Folgendes konfiguriert ist:
die Berechnung einer Anzeigezeitversetzung und ihre Speicherung in besagtem Speicher, und
die Anwendung besagter Anzeigezeitversetzung auf die Anzeigezeit in einem jeden der Pakete in besagter Gruppe.

16. Ein Medienserver (115) gemäß Patentanspruch 15, bei dem
für jede Paketstromgruppe in besagten ersten Daten jedes Kontrollpaket die Serverzeit und eine entsprechende Anzeigezeit enthält, die eine erste Funktion besagter Serverzeit ist,
für jede Paketstromgruppe in besagten zweiten Daten jedes Kontrollpaket eine Serverzeit und eine entsprechende Anzeigezeit enthält, die eine zweite Funktion besagter Serverzeit ist, und
für jede Paketstromgruppe in besagten zweiten Daten besagter Prozessor zur Berechnung der Anzeigezeitversetzung durch Folgendes konfiguriert ist:
die Auswahl einer Paketstromgruppe in besagten zweiten Daten;
die Auswahl einer Serverzeit;
die Verwendung der Kontrollpakete in besagter ausgewählter Gruppe, wobei eine erste Anzeigezeit ermittelt wird, die besagter ausgewählter Serverzeit entspricht;
die Bestimmung der Paketstromgruppe in besagten ersten Daten, die die gleiche Art von Daten überträgt wie besagte ausgewählte Stromgruppe;
die Verwendung der Kontrollpakete in besagter bestimmter Gruppe, wobei eine zweite Anzeigezeit ermittelt wird, die besagter festgelegter Serverzeit entspricht;
die Berechnung der Differenz zwischen der ersten und zweiten Anzeigezeit; und
die derartige Einstellung besagter Anzeigezeitverschiebung, dass sie mit besagter berechneter Differenz übereinstimmt.

17. Ein Medienserver (115) gemäß Patentanspruch 16, bei dem besagter Prozessor des Weiteren zur Ausführung besagten Schrittes der Berechnung einer Anzeigezeitversetzung durch das Hinzufügen einer vorherigen Anzeigezeitversetzung zu besagter berechneter Differenz konfiguriert ist.

18. Ein Medienserver (115) gemäß einem der Patentansprüche 16 oder 17, bei dem für jede Paketstromgruppe in besagten zweiten Daten besagter Prozessor des Weiteren zur Erhöhung besagter berechneter Differenz durch Folgendes konfiguriert ist:
die Auswahl des ersten im Datenpaketstrom in besagter Gruppe zu sendenden Pakets und das Hinzufügen besagter berechneter Differenz zur Anzeigezeit besagten ersten Pakets, so dass eine dritte Anzeigezeit geschaffen wird;
die Auswahl des letzten in der Paketstromgruppe in besagten ersten Daten zu sendenden Pakets, das die gleiche Art von Daten überträgt wie besagte Stromgruppe;
den Vergleich besagter dritter Anzeigezeit mit besagter Anzeigezeit besagten ausgewählten letzten Pakets; und
die Erhöhung besagter berechneter Differenz als Schlussfolgerung aus besagtem Vergleich.

19. Ein Medienserver (115) gemäß Patentanspruch 18, bei dem besagter Prozessor zur Erhöhung besagter berechneter Differenz durch Folgendes konfiguriert ist:
die Umrechnung der Differenz zwischen besagter erster Anzeigezeit und besagter Anzeigezeit besagten ausgewählten letzten Pakets in eine Serverzeit unter Verwendung der Funktion erster Daten;
die Umrechnung besagter Serverzeit in eine Anzeigezeit gemäß der Funktion besagter zweiter Daten; und
das Hinzufügen besagter Anzeigezeit zu besagter berechneter Differenz.

20. Ein Medienserver (115) gemäß einem beliebigen der Patentansprüche 16 bis 19, bei dem besagter Prozessor des Weiteren zur Abänderung eines Kennzeichens besagter zweiter Daten durch die Anwendung besagter Anzeigezeitversetzung auf die Anzeigezeit in einem jeden besagter Kontrollpakete in besagten zweiten Daten konfiguriert ist.

21. Ein Medienserver (115) gemäß einem beliebigen der Patentansprüche 12 bis 20, bei dem besagter Prozessor des Weiteren zur Veränderung besagter zweiter Daten durch die Anwendung einer Sequenznummerversetzung auf die Sequenznummer eines jeden Pakets in besagten zweiten Daten konfiguriert ist.

22. Ein Medienserver (115) gemäß einem beliebigen der Patentansprüche 12 bis 21, bei dem besagter Prozessor konfiguriert ist
zur genauen Bestimmung, in besagtem Speicher, eines ersten Serverkanal-Objekts, das besagte erste Daten empfängt und ausgibt, und eines zweiten Serverkanal-Objekts, das besagte zweite Daten empfängt und ausgibt;
zur genauen Bestimmung, in besagtem Speicher, eines Nutzerkanal-Objekts, das Daten von einem besagter Serverkanal-Objekte als Eingabe empfängt, besagte Daten gemäß gespeicherten Variablen verändert und besagte veränderte Daten an besagtes Endgerät ausgibt; und
zur Abänderung der Variablen in besagtem Nutzerkanal-Objekt, wenn die Eingabe an besagtes Nutzerkanal-Objekt sich ändert.

## Revendications

1. Une méthode de fourniture de données sur un réseau, comprenant les interventions suivantes :
négociation d'une voie de communications avec un terminal relié à un réseau (101, 102, 103, 104, 105, 106, 107) ;
fourniture de données de premier ordre (1615) composées d'une série de paquets, comprenant chacun un temps d'affichage audit terminal par ladite voie de transmission ;
réception d'une demande dudit terminal pour la fourniture de données de deuxième ordre audit terminal ;
arrêt de la fourniture desdites données de premier ordre audit terminal ; et
fourniture de données de deuxième ordre (1616) comprenant une série de paquets, chaque paquet comprenant un temps d'affichage audit terminal par ladite voie de transmission,
**caractérisée par le fait que** le temps d'affichage dans chacun des paquets dans lesdites données de deuxième ordre est modifié de telle façon que lesdites données de deuxième ordre ressemblent auxdites données de premier ordre.

2. Une méthode selon la revendication 1, dans laquelle lesdites données de premier ordre et lesdites données de deuxième ordre sont des données audiovisuelles représentant une première chaîne de télévision et une deuxième chaîne de télévision respectivement.

3. Une méthode selon une ou l'autre des revendications 1 ou 2, dans laquelle lesdites données de premier ordre et lesdites données de deuxième ordre comprennent chacune une série de flux de paquets de données.

4. Une méthode selon une quelconque des revendications 1 à 3, dans laquelle :
lesdites données de premier ordre et lesdites données de deuxième ordre comprennent chacune une première et une deuxième série de flux de paquets, chaque série comprenant un flux de paquets de données et un flux de paquets de contrôle.
La série de paquets de données dans ladite première série transporte des données vidéo et la série de paquets de données dans ladite deuxième série transporte des données audio.

5. Une méthode selon la revendication 4, dans laquelle chacune desdits paquets de données contient un temps d'affichage correspondant à un temps de serveur, et ladite intervention de modification du temps d'affichage dans chacun des paquets dans lesdites données de deuxième ordre comprend, pour chacune des séries de paquets dans lesdites données de deuxième ordre :
le calcul d'un décalage du temps d'affichage, et
l'application dudit décalage de temps d'affichage au temps d'affichage dans chacun des paquets de ladite série.

6. Une méthode selon la revendication 5, dans laquelle
pour chaque série de flux de paquets dans lesdites données de premier ordre, chaque paquet de contrôle contient un temps de serveur et un temps d'affichage correspondant, qui est une première fonction dudit temps de serveur,
pour chaque série de flux de paquets dans lesdites données de deuxième ordre, chaque paquet de contrôle contient un temps de serveur et un temps d'affichage correspondant, qui est une deuxième fonction dudit temps de serveur, et
pour chaque série de flux de paquets dans lesdites données de deuxième ordre, chaque décalage de temps d'affichage est calculé par :
la sélection d'une série de flux de paquets dans lesdites données de deuxième ordre ;
la sélection d'un temps de serveur ;
l'utilisation des paquets de contrôle dans ladite série sélectionnée, en déterminant un premier temps d'affichage correspondant audit temps de serveur sélectionné ;
l'identification de la série de flux de paquets dans lesdites données de premier ordre transportant le même type de données que ladite série de flux ;
l'utilisation des paquets de contrôle dans ladite série identifiée, en déterminant un deuxième temps d'affichage correspondant audit temps de serveur spécifié ;
le calcul de la différence entre les premier et deuxième temps d'affichage ; et
la définition dudit décalage de temps d'affichage comme étant ladite différence calculée.

7. Une méthode selon la revendication 6, dans laquelle chaque opération de calcul d'un décalage de temps d'affichage comprend l'opération de l'addition d'un décalage de temps d'affichage précédent à ladite différence calculée.

8. Une méthode selon les revendications 6 ou 7, dans laquelle, pour chaque série de flux de paquets dans lesdites données de deuxième ordre, ladite opération de calcul du décalage de temps d'affichage comporte également l'augmentation de ladite différence calculée :
en sélectionnant le premier paquet à envoyer dans le flux de paquets de données de ladite série, et l'addition de ladite différence calculée au temps d'affichage dudit premier paquet pour produire un troisième temps d'affichage :
en sélectionnant le dernier paquet à envoyer dans la série de flux de paquets dans les données de premier ordre transportant le même type de données que ladite série de flux ;
en comparant ledit troisième temps d'affichage avec ledit temps d'affichage dudit dernier paquet ; et
en accroissant ladite différence calculée en réponse à ladite comparaison.

9. Une méthode selon la revendication 8, dans laquelle ladite opération d'accroissement de ladite différence calculée comprend les opérations suivantes :
conversion de la différence entre ledit premier temps d'affichage et ledit temps d'affichage dudit dernier paquet sélectionné en temps de serveur, en utilisant la fonction des données de premier ordre ;
conversion dudit temps de serveur dans un temps d'affichage conformément à la fonction desdites données de deuxième ordre ; et
addition dudit temps d'affichage à ladite différence calculée,

10. Une méthode selon une quelconque des revendications 5 à 9, dans laquelle ladite opération de modification d'une caractéristique desdites données de deuxième ordre comprend également l'application dudit décalage du temps d'affichage au temps d'affichage dans chacun des paquets de contrôle dans lesdites données de deuxième ordre.

11. Une méthode selon une quelconque des revendications 1 à 10, comprenant également l'opération d'application d'un décalage du numéro de séquence de chaque paquet desdites données de deuxième ordre.

12. Un serveur de média (115) assurant la fourniture de données sur un réseau, comprenant un processeur (1501, 1502), une mémoire (1503), une première connexion de réseau (1507), et une deuxième connexion de réseau (1508), dans lequel ledit processeur est configuré pour :
recevoir des données de premier et de deuxième ordre (1615, 1616) à travers ladite première connexion de réseau, lesdites données de premier et de deuxième ordre comprenant chacune une série de paquets, et chaque paquet comprenant un temps d'affichage ;
recevoir une première requête d'un terminal (101, 102, 103, 104, 105, 106, 107) de fourniture desdites données de premier ordre ;
fournir lesdites données de premier ordre audit terminal à travers ladite deuxième connexion de réseau ;
recevoir une deuxième requête dudit terminal pour la fourniture desdites données de deuxième ordre ; et
cesser de fournir lesdites données de premier ordre audit terminal ;
**caractérisé par le fait que** ledit processeur est également configuré pour :
modifier le temps d'affichage dans chaque paquet dans lesdites données de deuxième ordre de sorte que lesdites données de deuxième ordre ressemblent auxdites données de premier ordre ; et
fournir lesdites données de deuxième ordre modifiées audit terminal à travers ladite deuxième connexion de réseau.

13. Un serveur de média (115) selon la revendication 12, dans lequel lesdites données de premier ordre et lesdites données de deuxième ordre sont des données audiovisuelles représentant respectivement une première et une deuxième chaîne de télévision.

14. Un serveur de média (115) selon une des revendications 12 ou 13, dans lequel:
lesdites données de premier ordre et lesdites données de deuxième ordre comprennent une première et une deuxième série de flux de paquets, chaque série comprenant une série de paquets de données et un flux de paquets de contrôle,
le flux de paquets de données de la première série transporte des données de vidéo, et le flux de paquets de données de la deuxième série transporte des données audio.

15. Un serveur de média (115) selon la revendication 14, dans lequel chacun desdits paquets de données contient un temps d'affichage correspondant à un temps de serveur, et ledit processeur est configuré pour modifier le temps d'affichage dans chacun desdits paquets en effectuant, pour chaque série de flux de paquets dans lesdites données de deuxième ordre :
le calcul d'un décalage de temps d'affichage et son stockage dans ladite mémoire; et
l'application dudit décalage de temps d'affichage au temps d'affichage de chacun des paquets de chaque série.

16. Un serveur de média (115) selon la revendication 15, dans lequel
pour chaque série de paquets dans lesdites données de premier ordre, chaque paquet de contrôle contient le temps de serveur et un temps d'affichage correspondant, qui est une première fonction dudit temps de serveur,
pour chaque série de flux de paquets dans lesdites données de deuxième ordre, chaque paquet de contrôle contient un temps de serveur et un temps d'affichage correspondant, qui est une deuxième fonction dudit temps de serveur, et
pour chaque série de flux de paquets dans lesdites données de deuxième ordre, ledit processeur est configuré pour calculer le décalage de temps d'affichage par:
la sélection d'une série de flux de paquets dans lesdites données de deuxième ordre ;
la sélection d'un temps de serveur ;
l'utilisation des paquets de contrôle dans ladite série sélectionnée, en déterminant un premier temps d'affichage correspondant audit temps de serveur sélectionné ;
l'identification de la série de flux de paquets dans lesdites données de premier ordre transportant le même type de données que ladite série de flux ;
l'utilisation des paquets de contrôle dans ladite série identifiée, en déterminant un deuxième temps d'affichage correspondant audit temps de serveur spécifié ;
le calcul de la différence entre les premier et deuxième temps d'affichage ; et
la définition dudit décalage de temps d'affichage comme étant ladite différence calculée.

17. Un serveur de média (115) selon la revendication 16, dans lequel ledit processeur est également configuré pour effectuer ladite opération de calcul d'un décalage de temps d'affichage, en ajoutant un décalage de temps d'affichage précédent à ladite différence calculée.

18. Un serveur de média (115) selon une des revendications 16 ou 17, dans lequel, pour chaque série de flux de paquets dans lesdites données de deuxième ordre, ledit processeur est configuré également pour accroître ladite différence calculée:
en sélectionnant le premier paquet à transmettre dans le flux de paquets de données dans ladite série, et en ajoutant ladite différence calculée au temps d'affichage dudit premier paquet pour produire un troisième temps d'affichage ;
en sélectionnant le dernier paquet à transmettre dans la série de flux de paquets dans lesdites données de premier ordre émettant le même type de données que ladite série de flux ;
en comparant ledit troisième temps d'affichage avec ledit temps d'affichage dudit dernier paquet sélectionné ; et
en augmentant ladite différence calculée en réponse à ladite comparaison.

19. Un serveur de média (115) selon la revendication 18, dans lequel ledit processeur est configuré pour accroître ladite différence calculée
en convertissant la différence entre ledit premier temps d'affichage et ledit temps d'affichage dudit dernier paquet sélectionné dans un temps de serveur, en utilisant la fonction des données de premier ordre ;
en convertissant ledit temps de serveur en un temps d'affichage, conformément à la fonction desdites données de deuxième ordre ; et
en ajoutant ledit temps d'affichage à ladite différence calculée.

20. Un serveur de média (115) selon une quelconque des revendications 16 à 19, dans lequel ledit processeur est également configuré pour modifier lesdites données de deuxième ordre en appliquant ledit décalage de temps d'affichage au temps d'affichage dans chacun desdits paquets de contrôle dans les données de deuxième ordre.

21. Un serveur de média (115) selon une quelconque des revendications 12 à 20, dans lequel ledit processeur est également configuré pour modifier lesdites données de deuxième ordre en appliquant un décalage de nombre séquentiel au nombre séquentiel de chaque paquet dans lesdites données de deuxième ordre.

22. Un serveur de média (115) selon une quelconque des revendications 12 à 21, dans lequel ledit processeur est configuré
pour définir, dans ladite mémoire, un premier objet de chaîne de serveur recevant et émettant lesdites données de premier ordre et un deuxième objet de chaîne de serveur recevant et émettant lesdites données de deuxième ordre ;
pour définir, dans ladite mémoire, un objet de chaîne utilisateur recevant des données d'un desdits objets de chaîne de serveur en tant qu'entrée, modifie lesdites données selon des variables mémorisées, et transmet lesdites données modifiées audit terminal ; et
pour modifier les variables dans ledit objet de chaîne utilisateur en cas de modification de l'entrée dans ledit objet de chaîne utilisateur.
